# EUROPEAN PATENT APPLICATION

(11) **EP 4 682 996 A1**
(43) Date of publication of application: **21.01.2026**
(21) Application number: 24895526.2
(22) Date of filing: 05.06.2024
(51) Int. Cl.: H01M 4/62, H01M 4/52, H01M 10/42, H01M 10/05

(54) **CAPACITY COMPENSATION ADDITIVE AND PREPARATION METHOD THEREFOR, POSITIVE ELECTRODE SHEET, BATTERY, AND ELECTRIC DEVICE**

(30) Priority: 27.11.2023 CN 202311608084
(71) Applicant: Contemporary Amperex Technology Co., Limited, Ningde, Fujian 352100 (CN)
(72) Inventor: ZHANG, Xingwen, Ningde, Fujian 352100 (CN); WANG, Bangrun, Ningde, Fujian 352100 (CN); HUAN, Shuxing, Ningde, Fujian 352100 (CN); LIU, Na, Ningde, Fujian 352100 (CN)
(74) Representative: Lorenz Seidler Gossel Part. mbB
(86) International application number: PCT/CN2024/097545
(87) International publication number: WO 2025/112420

(57) **Abstract**

The present application discloses a capacity compensation additive and a preparation method therefor, as well as a positive electrode plate, a battery and an electrical apparatus. The capacity compensation additive includes a capacity compensation agent and a catalyst-containing carbon material, and the catalyst-containing carbon material is coated on at least a portion of a surface of the capacity compensation agent.

## Description

### PRIORITY INFORMATION

The present application claims priority to Chinese Patent Application No. 202311608084.2 filed to the China National Intellectual Property Administration on November 27, 2023 and entitled "CAPACITY COMPENSATION ADDITIVE AND PREPARATION METHOD THEREFOR, AS WELL AS POSITIVE ELECTRODE PLATE, BATTERY, AND ELECTRICAL APPARATUS", the entire content of which is incorporated herein by reference.

### TECHNICAL FIELD

The present application relates to the technical field of batteries, and in particular to a capacity compensation additive and a preparation method therefor, a positive electrode plate, a battery, and an electrical apparatus.

### BACKGROUND

In recent years, as the application range of batteries is becoming wider and wider, the batteries have been widely applied in hydropower, firepower, wind power and solar power stations, and the like energy storage power supply systems, as well as in many fields of electric tools, electric bicycles, electric motorcycles, electric vehicles, military equipment, aerospace and the like. During a chemical formation process of a battery, the formation of an SEI film (solid electrolyte interface) on the surface of a negative electrode will consume a large amount of active ions, resulting in reduced charge and discharge efficiency of the battery in the first cycle and serious irreversible capacity loss.

In order to solve the problems of low first charge and discharge efficiency of the battery and serious irreversible capacity loss, capacity compensation at a positive electrode plate is an effective solution. However, the existing capacity compensation agents have poor conductivity and require a higher decomposition voltage to achieve the deintercalation of active ions. Under high voltage, an electrolyte solution is prone to side reactions, and the structure of a positive-electrode active material will undergo irreversible changes, affecting the capacity and cycling performance of the battery.

### SUMMARY

In view of the technical problems that existed in the background, the present application provides a capacity compensation additive, aiming to improve the capacity and cycling performance of a battery containing the capacity compensation additive.

In order to achieve the aforementioned objective, a first aspect of the present application proposes a capacity compensation additive including a capacity compensation agent and a catalyst-containing carbon material, where the catalyst-containing carbon material is coated on at least a portion of a surface of the capacity compensation agent.

The present application includes at least the following beneficial effects: the catalyst-containing carbon material is adopted in the capacity compensation additive of the present application, and the catalyst-containing carbon material is coated on at least a portion of the surface of the capacity compensation agent. That is, the catalyst and the capacity compensation agent are not easy to fall off from each other, which is beneficial to the exertion of the catalytic performance of the catalyst, and the conductivity of the capacity compensation agent can be improved, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change of the structure of the positive-electrode active material, thereby improving the cycling performance of the battery.

In some embodiments, the catalyst-containing carbon material includes a carbon support and a catalyst, and the catalyst is supported on at least a portion of the carbon support, and the catalyst includes MₓQ_{y}, wherein 1 ≤ x ≤ 6 and 1 ≤ y ≤ 3, M includes at least one of Ni, Co, Mn, Fe, Cu, Ti, Nb, Mg or Cr, and Q includes at least one of O, N, S or P. Thus, the capacity and cycling performance of the battery containing the capacity compensation additive can be improved.

In some embodiments, M includes at least one of Ni, Co, or Fe, and Q includes O and/or N. Thus, the capacity and cycling performance of the battery containing the capacity compensation additive can be improved.

In some embodiments, a mass proportion of the catalyst is 5%-20% based on a total mass of the catalyst-containing carbon material. Thus, the capacity and cycling performance of the battery containing the capacity compensation additive can be improved.

In some embodiments, a mass proportion of the catalyst is 5%-15% based on a total mass of the catalyst-containing carbon material. Thus, the capacity and cycling performance of the battery containing the capacity compensation additive can be improved.

In some embodiments, a particle size of the catalyst is 300 nm-1 µm. Thus, the catalytic effect on the decomposition of the capacity compensation agent can be improved.

In some embodiments, the particle size of the catalyst is 500 nm-800 nm. Thus, the catalytic effect on the decomposition of the capacity compensation agent can be improved.

In some embodiments, a mass proportion of the catalyst-containing carbon material is 1%-20% based on a total mass of the capacity compensation additive. Thus, the cycling performance of the battery containing the capacity compensation additive can be improved.

In some embodiments, a mass proportion of the catalyst-containing carbon material is 5%-10% based on a total mass of the capacity compensation additive. Thus, the cycling performance of the battery containing the capacity compensation additive can be improved.

In some embodiments, the capacity compensation agent includes AₐC_{b}O_{c}, where the A includes Na and/or Li, 2 ≤ a ≤ 4, 1 ≤ b ≤ 6, and 3 ≤ c ≤ 6. Therefore, it facilitates the improvement in the energy density of the battery, without deteriorating the power performance of the battery.

In some embodiments, the capacity compensation agent includes a lithium supplementing agent, and the lithium supplementing agent includes at least one of Li₂CO₃, Li₂C₂O₄, Li₂C₄O₄, Li₂C₄O₆ or Li₂C₃O₅. Therefore, it facilitates the improvement in the energy density of the battery, without deteriorating the power performance of the battery.

In some embodiments, the lithium supplementing agent includes at least one of Li₂CO₃, Li₂C₂O₄ or Li₂C₄O₄. Therefore, it facilitates the improvement in the energy density of the battery, without deteriorating the power performance of the battery.

In some embodiments, the capacity compensation agent includes a sodium supplementing agent, and the sodium supplementing agent includes at least one of Na₂CO₃, Na₂C₂O₄, Na₂C₄O₄, Na₂C₆O₆ or Na₄C₆O₆. Therefore, it facilitates the improvement in the energy density of the battery, without deteriorating the power performance of the battery.

In some embodiments, the sodium supplementing agent includes at least one of Na₂C₂O₄ or Na₂C₄O₄. Therefore, it facilitates the improvement in the energy density of the battery, without deteriorating the power performance of the battery.

In some embodiments, a volume average particle size Dv50 of the capacity compensation additive is 1 µm-20 µm. Thus, the capacity and cycling performance of the battery containing the capacity compensation additive can be improved.

In some embodiments, the volume average particle size Dv50 of the capacity compensation additive is 1 µm-10 µm. Thus, the capacity and cycling performance of the battery containing the capacity compensation additive can be improved.

In some embodiments, powder resistivity of the capacity compensation additive is less than or equal to 5 Ω·cm under 20 MPa. Thus, the capacity and cycling performance of the battery containing the capacity compensation additive can be improved.

In some embodiments, the powder resistivity of the capacity compensation additive is less than or equal to 1 Ω·cm under 20 MPa. Thus, the capacity and cycling performance of the battery containing the capacity compensation additive can be improved.

In some embodiments, a decomposition voltage of the capacity compensation additive is lower than or equal to 4.5 V. Thus, the capacity and cycling performance of the battery containing the capacity compensation additive can be improved.

In some embodiments, the decomposition voltage of the capacity compensation additive is lower than or equal to 4.3V. Thus, the capacity and cycling performance of the battery containing the capacity compensation additive can be improved.

In a second aspect of the present application, the present application proposes a method for preparing a capacity compensation additive, including coating a catalyst-containing carbon material on at least a portion of a surface of a capacity compensation agent, so as to obtain the capacity compensation additive.

Thus, the capacity compensation additive prepared in the present application includes the catalyst-containing carbon material, and the catalyst-containing carbon material is coated on at least a portion of the surface of the capacity compensation agent. That is, the catalyst and the capacity compensation agent are not easy to fall off from each other, which is beneficial to the exertion of the catalytic performance of the catalyst, and the conductivity of the capacity compensation agent can be improved, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery.

In some embodiments, the coating a catalyst-containing carbon material on at least a portion of a surface of a capacity compensation agent is conducted by the following manner: spray-drying a slurry including the catalyst-containing carbon material and the capacity compensation agent, so that the catalyst-containing carbon material is coated on at least a part of the surface of the capacity compensation agent. Thus, the capacity and cycling performance of the battery containing the capacity compensation additive can be improved.

In some embodiments, the spray-drying includes at least one of the following conditions: a concentration of the slurry including the capacity compensation agent and the catalyst-containing carbon material is 20 g/L-50 g/L, and optionally 20 g/L-30 g/L; an air inlet temperature is 120 C-150 C; and an air outlet temperature is 80 C-100 C. Thus, the capacity and cycling performance of the battery containing the capacity compensation additive can be improved.

In some embodiments, the coating a catalyst-containing carbon material on at least a portion of a surface of a capacity compensation agent is conducted by the following manner: carrying out electrostatic spinning on a slurry including the catalyst-containing carbon material and the capacity compensation agent, so that the catalyst-containing carbon material is coated on at least a part of the surface of the capacity compensation agent. Thus, the capacity and cycling performance of the battery containing the capacity compensation additive can be improved.

In some embodiments, the electrostatic spinning includes at least one of the following conditions: a concentration of the slurry including the capacity compensation agent and the catalyst-containing carbon material is 5 g/L-20 g/L; a push speed of a spinneret is 0.3 mL/h-1 mL/h; a voltage between the spinneret and a receiver is 15 kV-18 kV; and a distance between the spinneret and the receiver is 12 cm-20 cm. Thus, the capacity and cycling performance of the battery containing the capacity compensation additive can be improved.

In a third aspect of the present application, the present application proposes a positive electrode plate, including the capacity compensation additive of the first aspect or a capacity compensation additive obtained by the method of the second aspect. Thus, the capacity and cycling performance of the battery containing the capacity compensation additive can be improved.

In some embodiments, the positive electrode plate includes a positive-electrode active material layer, and the positive-electrode active material layer includes the capacity compensation additive. Thus, the capacity and cycling performance of the battery containing the capacity compensation additive can be improved.

In some embodiments, a mass proportion of the capacity compensation additive is 1%-20% based on a total mass of the positive active material layer. Thus, the capacity and cycling performance of the battery containing the capacity compensation additive can be improved.

In some embodiments, a mass proportion of the capacity compensation additive is 1%-5% based on a total mass of the positive active material layer. Thus, the capacity and cycling performance of the battery containing the capacity compensation additive can be improved.

In a fourth aspect of the present application, the present application proposes a battery, including the positive electrode plate of the third aspect. Thus, the battery has higher capacity and cycling performance.

In a fifth aspect of the present application, the present application proposes an electrical apparatus, including the battery of the fourth aspect. Therefore, the electrical apparatus has excellent service life.

Additional aspects and advantages of the present application will be set forth in part in the description which follows, and in part will be obvious from the description which follows, or may be learned by practice of the present application.

### DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the accompanying drawings:
FIG. 1 is a schematic view of a battery according to an embodiment of the present application.
FIG. 2 is an exploded view of the battery according to an embodiment of the present application as shown in FIG. 1.
FIG. 3 is a schematic view of a battery module according to an embodiment of the present application.
FIG. 4 is a schematic diagram of a battery pack according to an embodiment of the present application.
FIG. 5 is an exploded view of the battery pack according to an embodiment of the present application as shown in FIG. 4.
FIG. 6 is a schematic view of an electrical apparatus in which a battery is used a power source, according to an embodiment of the present application.
FIG. 7 is a comparison chart of cycling curves of Example 1, Comparative Example 1 and Comparative Example 6.
FIG. 8 is a SEM image of a capacity compensation additive obtained in Example 1.
FIG. 9 is a distribution diagram of a Ni element in the EDS spectrum of the capacity compensation additive obtained in Example 1.

Description of reference numerals:
1 battery cell; 11 case; 12 electrode assembly; 13 cover plate; 2 battery module; 3 battery pack; 31 upper box; 32 lower box.

### DETAILED DESCRIPTION

The embodiments of the technical solution of the present application will be described in detail below. The following embodiments are only used to more clearly illustrate the technical solutions of the present application, therefore only as examples, and cannot be used to limit the scope of protection of the present application.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described herein can be combined with other embodiments.

A "range" disclosed in the present application is defined in the form of a lower limit and an upper limit, with a given range being defined by the selection of a lower limit and an upper limit, and the selected lower and upper limits defining the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), which means that the method may comprise steps (a) and (b) performed in order, or may comprise steps (b) and (a) performed in order. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Currently, from the development of market situation, the application of secondary batteries is becoming increasingly more extensive. Secondary batteries have not only been applied to energy storage power source systems such as hydraulic, firepower, wind and solar power stations, but have also widely applied to many fields, e.g., electric transportation vehicles such as electric bicycles, electric motorcycles, and electric automobiles, as well as military equipment and aerospace. With the continuous expansion of the application field of the secondary batteries, the market demand of the secondary batteries is also constantly expanding.

During a chemical formation process of a secondary battery, the formation of an SEI film (solid electrolyte interface) on the surface of a negative electrode will consume a large amount of active ions, resulting in reduced charge and discharge efficiency of the battery in the first cycle and serious irreversible capacity loss.

In order to solve the problems of low first charge and discharge efficiency of the battery and serious irreversible capacity loss, capacity compensation at a positive electrode plate is an effective solution. Lithium supplementing for a negative electrode plate is usually done with lithium sheets. The lithium sheets themselves are very active in an electrolyte and easily react with an electrolyte solution, resulting in low lithium supplementing efficiency. In addition, when lithium dendrites are generated on the surface of the negative electrode, the SEI film will continue to rupture and reconstruct, continuously consuming lithium, thereby reducing the cycle life of the battery. A lithium-rich additive or a lithiated active material is usually added to a positive electrode plate as a lithium supplementing agent. This type of lithium supplementing agent has a high decomposition potential and requires high voltage to decompose. However, the high voltage will destroy the structure of the positive-electrode active material, and meanwhile the high voltage will cause the electrolyte solution to oxidize and decompose, and will increase the side reactions, thereby reducing the cycling performance of the battery and being unfavorable to the exertion of the capacity of the battery.

The capacity compensation additive of the present application has a lower decomposition voltage, so that the capacity compensation agent can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery.

The capacity compensation additive disclosed in the embodiments of the present application is applicable to a lithium-ion battery and a sodium-ion battery, and the battery disclosed in the embodiments of the present application can be used in an electrical device that uses the battery as the power source or in various energy storage systems that use batteries as energy storage elements. The electrical device may include, but is not limited to, a mobile phone, a tablet, a laptop, an electric toy, an electric tool, a storage battery car, an electric vehicle, a ship, a spacecraft, etc. The electric toy may include fixed or mobile electric toys, such as a game machine, an electric vehicle toy, an electric ship toy, and an electric airplane toy, etc. The spacecraft may include an airplane, a rocket, a space shuttle and a spaceship, etc.

A first aspect of the present application proposes a capacity compensation additive including a capacity compensation agent and a catalyst-containing carbon material, where the catalyst-containing carbon material is coated on at least a portion of a surface of the capacity compensation agent.

The catalyst-containing carbon material is adopted in the capacity compensation additive of the present application, and the catalyst-containing carbon material is coated on at least a portion of the surface of the capacity compensation agent. That is, the catalyst and the capacity compensation agent are not easy to fall off from each other, which is beneficial to the exertion of the catalytic performance of the catalyst, and the conductivity of the capacity compensation agent can be improved, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change of the structure of the positive-electrode active material, thereby improving the cycling performance of the battery. In addition, when the capacity compensation agent in the capacity compensation additive is consumed, the catalyst-containing carbon material can still play a supporting role and will not cause changes in the electrode structure.

In some embodiments of the present application, the catalyst-containing carbon material includes a carbon support and a catalyst, and the catalyst is supported on at least a portion of the carbon support, and the catalyst includes MₓQ_{y}, wherein 1 ≤ x ≤ 6 and 1 ≤ y ≤ 3, M may include at least one of Ni, Co, Mn, Fe, Cu, Ti, Nb, Mg or Cr, and Q may include at least one of O, N, S or P. Therefore, by loading the metal compound on the carbon material, not only can the agglomeration of the catalyst be reduced, which is beneficial to the exertion of the catalytic performance of the catalyst, but also the conductivity of the catalyst can be significantly improved, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery. In some other embodiments of the present application, M in MₓQ_{y} may include at least one of Ni, Co or Fe, and Q may include O and/or N.

As an example, MₓQ_{y} may include at least one of NiO, Ni₃N₂, NiS, Ni₂P, CoO, CoN, CoS, CoP, MnO₂, MnN, MnS, Mn₃P₂, Fe₂O₃, Fe₆N₂, Fe₂S₃, Fe₃P, CuO, Cu₃N, CuS, Cu₃P₂, TiO₂, TiN, TiS₃, TiP, Nb₂O₅, NbN, NbS₂, NbP, MgO, Mg₃N₂, MgS, Mg₃P₂, Cr₂O₃, CrN, Cr₂S₃ or Cr₃P₂. In some other embodiments, MₓQ_{y} may include at least one of NiO, Ni₃N₂, CoO, CoN, MnO₂, MnN, Fe₂O₃ or Fe₆N₂.

As an example, the carbon support may include, but is not limited to, a carbon nanotube, graphene, a carbon nanofiber, etc.

In some embodiments of the present application, a mass proportion of the catalyst is 5%-20%, for example 7%-18%, 10%-15%, 10%-12% etc. based on a total mass of the catalyst-containing carbon material. Therefore, by adopting the catalyst-containing carbon material with the aforementioned composition, the catalysis and conductivity of the catalyst-containing carbon material can be improved, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery. In some other embodiments of the present application, a mass proportion of the catalyst is 5%-15% based on a total mass of the catalyst-containing carbon material.

In some embodiments of the present application, the particle size of the catalyst may be 300 nm-1 µm, for example, 350 nm-950 nm, 400 nm-900 nm, 450 nm-850 nm, 500 nm-800 nm, 550 nm-750 nm, 600 nm-700 nm, 650 nm-700 nm, etc. Therefore, the catalyst with this particle size is adopted in the present application, which is not only evenly distributed on the carbon support, but also has an excellent catalytic effect on the capacity compensation agent, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery. In some other embodiments of the present application, the particle size of the catalyst may be 500 nm-800 nm.

In some embodiments of the present application, a mass proportion of the catalyst-containing carbon material is 1%-20%, for example 1%-18%, 3%-15%, 5%-12%, 7%-10% etc., based on a total mass of the capacity compensation additive. Therefore, by adding the catalyst-containing carbon material with the aforementioned content into the capacity compensation additive, the decomposition voltage of the capacity compensation additive can be reduced, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery. In some embodiments of the present application, a mass proportion of the catalyst-containing carbon material is 5%-10% based on a total mass of the capacity compensation additive.

In some embodiments of the present application, the capacity compensation agent includes AₐC_{b}O_{c}, where the A includes Na and/or Li, 2 ≤ a ≤ 4, 1 ≤ b ≤ 6, and 3 ≤ c ≤ 6. Therefore, the capacity compensation agent of this composition is adopted, it decomposes to release active ions and carbon oxide gas. The released active ions can compensate for the loss of active ions in the process of forming the SEI film, and the carbon oxide gas can be discharged in an exhaust procedure. Therefore, the capacity compensation agent has no residue after decomposition, which is beneficial to improve the energy density of the battery, and will not increase the impedance of the battery cell, thereby not deteriorating the power performance of the battery.

In some embodiments of the present application, the capacity compensation agent includes a lithium supplementing agent, and the lithium supplementing agent includes at least one of Li₂CO₃, Li₂C₂O₄, Li₂C₄O₄, Li₂C₄O₆ or Li₂C₃O₅. Therefore, the lithium supplementing agent of this composition is adopted, it decomposes to release lithium ions and carbon oxide gas. The released lithium ions can compensate for the loss of lithium ions in the process of forming the SEI film, and the carbon oxide gas can be discharged in an exhaust procedure. Therefore, the capacity compensation agent has no residue after decomposition, which is beneficial to improve the energy density of the battery, and will not increase the impedance of the battery cell, thereby not deteriorating the power performance of the battery. In another embodiment of the present application, the lithium supplementing agent includes at least one of Li₂CO₃, Li₂C₂O₄ or Li₂C₄O₄.

In some embodiments of the present application, the capacity compensation agent includes a sodium supplementing agent, and the sodium supplementing agent includes at least one of Na₂CO₃, Na₂C₂O₄, Na₂C₄O₄, Na₂C₆O₆ or Na₄C₆O₆. Therefore, the sodium supplementing agent of this composition is adopted, it decomposes to release sodium ions and carbon oxide gas. The released sodium ions can compensate for the loss of sodium ions in the process of forming the SEI film, and the carbon oxide gas can be discharged in an exhaust procedure. Therefore, the capacity compensation agent has no residue after decomposition, which is beneficial to improve the energy density of the battery, and will not increase the impedance of the battery cell, thereby not deteriorating the power performance of the battery. In some embodiments of the present application, the sodium supplementing agent includes at least one of Na₂C₂O₄ or Na₂C₄O₄.

In the present application, when the battery is a lithium-ion battery, the capacity compensation agent is a lithium supplementing agent; and when the battery is a sodium-ion battery, the capacity compensation agent is a sodium supplementing agent.

In some embodiments of the present application, the volume average particle size Dv50 of the capacity compensation additive is 1 µm-20 µm, for example 2 µm-18 µm, 5 µm-15 µm, 7 µm-12 µm, 8 µm-10 µm, etc. Therefore, the diffusion path of active ions in the capacity compensation additive of this particle size is suitable and easy to deintercalate, thereby increasing the gram capacity of the capacity compensation additive and reducing the risk of agglomeration between particles, thereby improving the capacity and cycling performance of the battery. In some other embodiments of the present application, the volume average particle size Dv50 of the capacity compensation additive is 1 µm-10 µm.

In the present application, Dv50 refers to a corresponding particle size when the cumulative volume distribution percentage reaches 50%. For example, it is determined by using a laser particle size analyzer (Malvern Master Size 2000) with reference to the standard GB/T 19077-2016/ISO 13320:2009. The specific test process is: an appropriate amount of a sample to be tested (as long as the sample concentration ensures a shading degree of 8%-12%) is taken, added with 20 ml of deionized water, and meanwhile subjected to ultrasound for 5 min (53 KHz/120 W) to ensure that the sample is completely dispersed, and then determined according to GB/T19077-2016/ISO 13320:2009 standard.

In some embodiments of the present application, the powder resistivity of the capacity compensation additive is less than or equal to 5 Ω·cm, for example 0.1 Ω·cm-5 Ω·cm, 0.3 Ω·cm-5 Ω·cm, 0.5 Ω·cm-5Ω·cm, 0.8 Ω·cm-5 Ω·cm, 1 Q-cm-5 Ω · cm, 1.5 Ω·cm-4.5 Ω·cm, 2 Ω·cm-4 Ω·cm, 2.5 Ω·cm-3.5 Ω·cm, 3 Ω·cm-3.5 Ω·cm, etc. under 20 MPa. Therefore, the capacity compensation additive of the present application has higher conductivity, which can reduce the decomposition voltage of the capacity compensation additive, so that the capacity compensation agent can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery. In some other embodiments of the present application, the powder resistivity of the capacity compensation additive is less than or equal to 1 Ω·cm under 20 MPa. Thus, the capacity and cycling performance of the battery containing the capacity compensation additive can be improved.

In the present application, the test method for powder resistivity may adopt a four-probe method or a two-probe method, where the four-probe method includes: using four probes to measure a current and a voltage on a powder sample, and calculating resistivity based on the current and the voltage. The two-probe method includes: using two probes to measure a current and a voltage on a powder sample, and calculating resistivity based on the current and the voltage.

In some embodiments of the present application, the decomposition voltage of the capacity compensation additive is lower than or equal to 4.5 V, for example 3 V-4.5 V, 3.2 V-4.2 V, 3.5 V-4 V, 3.5 V-3.8 V, etc. Therefore, the capacity compensation additive has a lower decomposition voltage, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change of the structure of the positive-electrode active material, thereby improving the cycling performance of the battery. In some other embodiments of the present application, the decomposition voltage of the capacity compensation additive is lower than or equal to 4.3 V.

In the present application, the decomposition voltage of the capacity compensation additive refers to the starting voltage of decomposition during a voltammetry test or a charge-discharge cycle. And, the voltammetry test method of "the decomposition voltage of the capacity compensation additive" in the present application includes cyclic voltammetry or linear sweep voltammetry.

A second aspect of the present application proposes a method for preparing a capacity compensation additive, including coating a catalyst-containing carbon material on at least a portion of a surface of a capacity compensation agent, so as to obtain the capacity compensation additive.

Thus, the capacity compensation additive prepared in the present application includes the catalyst-containing carbon material, and the catalyst-containing carbon material is coated on at least a portion of the surface of the capacity compensation agent. That is, the catalyst and the capacity compensation agent are not easy to fall off from each other, which is beneficial to the exertion of the catalytic performance of the catalyst, and the conductivity of the capacity compensation agent can be improved, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery. In addition, when the capacity compensation agent in the capacity compensation additive is consumed, the catalyst-containing carbon material can still play a supporting role and will not cause changes in the electrode structure.

In some embodiments of the present application, the coating a catalyst-containing carbon material on at least a portion of a surface of a capacity compensation agent is conducted by the following manner: spray-drying a slurry including the catalyst-containing carbon material and the capacity compensation agent, so that the catalyst-containing carbon material is coated on at least a part of the surface of the capacity compensation agent. Therefore, by adopting the spray-drying process, the catalyst-containing carbon material can be tightly coated on the surface of the capacity compensation agent and is not easy to fall off, which is beneficial to the exertion of the catalytic performance of the catalyst, and the conductivity of the capacity compensation agent can be improved, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery. In addition, when the capacity compensation agent in the capacity compensation additive is consumed, the catalyst-containing carbon material can still play a supporting role and will not cause changes in the electrode structure.

As an example, a catalyst-containing carbon material, a capacity compensation agent and a solvent are mixed and stirred evenly to obtain a slurry, and the slurry is spray-dried so that the catalyst-containing carbon material is coated on at least a portion of the surface of the capacity compensation agent to obtain a capacity compensation additive.

As an example, the solvent may include but is not limited to at least one of ethanol, deionized water, or ethylene glycol, etc.

In some embodiments of the present application, the concentration of the slurry including the capacity compensation agent and the catalyst-containing carbon material in the spray-drying is 20 g/L-50 g/L, for example 25 g/L-45 g/L, 30 g/L-40 g/L, 35 g/L-40 g/L, etc. In some embodiments of the present application, the concentration of the slurry including the capacity compensation agent and the catalyst-containing carbon material is 20 g/L-30g/L.

In some embodiments of the present application, in the spray-drying, an air inlet temperature is 120°C-150°C, for example 125°C-145°C, 130°C-140°C, 135°C-140°C, etc.; and an air outlet temperature is 80°C-100°C, for example 85°C-95°C, 85°C-90°C, etc.

In some other embodiments of the present application, the coating a catalyst-containing carbon material on at least a portion of a surface of a capacity compensation agent is conducted by the following manner: carrying out electrostatic spinning on a slurry including the catalyst-containing carbon material and the capacity compensation agent, so that the catalyst-containing carbon material is coated on at least a part of the surface of the capacity compensation agent. Therefore, by adopting the electrostatic spinning process, the catalyst-containing carbon material can be tightly coated on the surface of the capacity compensation agent and is not easy to fall off, which is beneficial to the exertion of the catalytic performance of the catalyst, and the conductivity of the capacity compensation agent can be improved, thereby reducing the decomposition voltage of the capacity compensation additive, so that the capacity compensation additive can release active ions at a lower voltage. The released active ions can compensate for the loss of active ions in a process of forming a SEI film, increase the capacity of the battery, and avoid the side reaction of an electrolyte solution at a high voltage and the irreversible change and side reaction of the structure of the positive-electrode active material, thereby improving the cycling performance of the battery. In addition, when the capacity compensation agent in the capacity compensation additive is consumed, the catalyst-containing carbon material can still play a supporting role and will not cause changes in the electrode structure.

As an example, a catalyst-containing carbon material, a capacity compensation agent and a solvent are mixed and stirred evenly to obtain a slurry, and the slurry is subjected to electrostatic spinning so that the catalyst-containing carbon material is coated on at least a portion of the surface of the capacity compensation agent to obtain a capacity compensation additive.

As an example, the solvent may include, but is not limited to, at least one of N,N-dimethylformamide (DMF), tetrahydrofuran, dichloromethane, and dimethyl sulfoxide (DMSO), etc.

In some embodiments of the present application, the concentration of the slurry including the capacity compensation agent and the catalyst-containing carbon material in the electrostatic spinning process is 5 g/L-20 g/L, for example 7.5 g/L-17.5 g/L, 10 g/L-15 g/L, 10 g/L-12.5 g/L, etc.

In some embodiments of the present application, a push speed of a spinneret is 0.3 mL/h-1 mL/h, for example 0.5 mL/h-0.8 mL/h, 0.6 mL/h-0.7 mL/h, etc.; a voltage between the spinneret and a receiver is 15 kV-18 kV, for example 15 kV-17 kV, 15 kV-16 kV, etc.; and a distance between the spinneret and the receiver is 12 cm-20 cm, for example 12 cm-18 cm, 15 cm-17 cm, etc.

In a third aspect of the present application, the present application proposes a positive electrode plate, and the positive electrode plate includes the capacity compensation additive of the first aspect or a capacity compensation additive obtained by the method of the second aspect. Therefore, by adding the capacity compensation additive into the positive electrode plate, the capacity compensation additive has a lower decomposition voltage, and can release active ions at a lower voltage. The released active ions can compensate for the loss of active ions in a process of forming a SEI film, increase the capacity of the battery, and avoid the side reaction of an electrolyte solution at a high voltage and the irreversible change of the structure of the positive-electrode active material, thereby improving the cycling performance and power performance of the battery. In addition, when the capacity compensation agent in the capacity compensation additive is consumed, the catalyst-containing carbon material can still play a supporting role and will not cause changes in the structure of the positive electrode plate.

In some embodiments of the present application, the positive electrode plate includes a positive-electrode active material layer, and the positive-electrode active material layer includes the capacity compensation additive. Therefore, by adding the aforementioned capacity compensation additive into the positive-electrode active material layer, the capacity compensation additive has a lower decomposition voltage, and can release active ions at a lower voltage. The released active ions can compensate for the loss of active ions in a process of forming a SEI film, increase the capacity of the battery, and avoid the side reaction of an electrolyte solution at a high voltage and the irreversible change of the structure of the positive-electrode active material, thereby improving the cycling performance and power performance of the battery. In addition, when the capacity compensation agent in the capacity compensation additive is consumed, the catalyst-containing carbon material can still play a supporting role and will not cause changes in the structure of the positive electrode plate.

In some embodiments of the present application, a mass proportion of the capacity compensation additive is 1%-20%, for example 3%-18%, 5%-15%, 7%-13%, 7%-10%, etc., based on a total mass of the positive active material layer. Therefore, by adding the capacity compensation additive of the aforementioned content into the positive-electrode active material layer, the capacity compensation additive has a lower decomposition voltage, and can release active ions at a lower voltage. The released active ions can compensate for the loss of active ions in a process of forming a SEI film, increase the capacity of the battery, and avoid the side reaction of an electrolyte solution at a high voltage and the irreversible change of the structure of the positive-electrode active material, thereby improving the cycling performance and power performance of the battery. In some other embodiments of the present application, a mass proportion of the capacity compensation additive is 1%-5% based on a total mass of the positive active material layer.

The positive electrode plate includes a positive-electrode current collector, and a positive-electrode active material layer is arranged on at least one side of the positive-electrode current collector.

As an example, the positive-electrode current collector has two opposite surfaces in its own thickness direction, and the positive-electrode active material layer is arranged on either or both of the opposite surfaces of the positive-electrode current collector.

In some embodiments of the present application, the positive current collector can be a metal foil or a composite current collector. For example, an aluminum foil may be adopted as the metal foil. The composite current collector may include a polymer base layer and a metal layer formed on at least one surface of the polymer base layer. The composite current collector can be formed by forming a metal material (aluminum, aluminum alloy, nickel, nickel alloy, titanium, titanium alloy, silver and silver alloy, etc.) on the polymer base layer (e.g., polypropylene (PP), polyethylene terephthalate (PET), polybutylene terephthalate (PBT), polystyrene (PS), polyethylene (PE), etc.).

In some embodiments of the present application, the positive-electrode active material layer may further include a positive-electrode active material. The positive-electrode active material can be a positive-electrode active material for a battery well known in the art.

As an example, when the positive electrode plate is used for a lithium-ion battery, the positive-electrode active material can be a positive-electrode active material for a lithium-ion battery well known in the art. As an example, the positive active material may include at least one of the following materials: a lithium-containing phosphate with an olivine structure, a lithium transition metal oxide, and respective modified compounds thereof. However, the present application is not limited to these materials, and other conventional materials that can be used as positive-electrode active materials for batteries may also be used. These positive-electrode active materials may be used alone or in combination of two or more thereof. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.3}Co_{0.2}Mn_{0.3}O₂ (also abbreviated as NCM₅₂₃), LiNi_{0.3}Co_{0.23}Mn_{0.23}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.8}Co_{0.15}Al_{0.05}O₂) or modified compounds thereof. Examples of the lithium-containing phosphate with an olivine structure may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, or a composite material of lithium manganese iron phosphate and carbon.

As an example, when the positive electrode plate is used for a sodium-ion battery, the positive-electrode active material can be a positive-electrode active material for a sodium-ion battery well known in the art. As an example, the positive-electrode active material may include, but is not limited to, at least one of a layered transition metal oxide, a polyanionic compound and a Prussian blue analog.

Examples of the layered transition metal oxide mentioned above, for example, may include:
Na₁₋ₓCuₕFeₖMn₁M¹ₘO_{2-y}, where M¹ includes at least one of Li, Be, B, Mg, Al, K, Ca, Ti, Co, Ni, Zn, Ga, Sr, Y, Nb, Mo, In, Sn or Ba, 0 < x ≤ 0.33, 0 < h ≤ 0.24, 0 ≤ k ≤ 0.32, 0 < 1 ≤ 0.68, 0 ≤ m < 0.1, h + k + 1 + m = 1, and 0 ≤ y < 0.2;
Na_{0.67}Mn_{0.7}Ni_{z}M²_{0.3-z}O₂, where M² includes at least one of Li, Mg, Al, Ca, Ti, Fe, Cu, Zn or Ba, and 0 < z ≤ 0.1; and
NaₐLi_{b}Ni_{c}Mn_{d}Fe_{c}O₂, where 0.67 < a ≤ 1, 0 < b < 0.2, 0 < c < 0.3, 0.67 < d + e < 0.8, and b + c + d + e = 1.

Examples of the polyanionic compound mentioned above, for example, may include:
A¹_{f}M³_{g}(PO₄)ᵢOⱼX¹₃₋ⱼ, where A¹ includes at least one of H, Li, Na, K or NH₄, M³ includes at least one of Ti, Cr, Mn, Fe, Co, Ni, V, Cu or Zn, X¹ is at least one of F, Cl or Br, 0 < f ≤ 4, 0 < g ≤ 2, 1 ≤ i ≤ 3, and 0 ≤ j ≤ 2;
NaₙM⁴PO₄X², where M⁴ includes at least one of Mn, Fe, Co, Ni, Cu or Zn, X² is at least one of F, Cl or Br, and 0 < n ≤ 2;
NaₚM⁵(SO₄)₃, where M⁵ includes at least one of Mn, Fe, Co, Ni, Cu or Zn, 0 < p ≤ 2, and 0 < q ≤ 2; and
NaₛMnₜFe₃₋ₜ(PO₄)₂(P₂O₇), where 0 < s ≤ 4, 0 ≤ t ≤ 3, and for example, t is 0, 1, 1.5, 2 or 3.

Examples of the Prussian blue analog mentioned above, for example, may include:
AᵤM⁶ᵥ[M⁷(CN)₆]_{w}·xH₂O, where A includes at least one of H⁺, NH₄⁺, an alkali metal cation or an alkaline earth metal cation, M⁶ and M⁷each independently includes at least one of transition metal cations, 0 < u ≤ 2, 0 < v ≤ 1, 0 < w ≤1, and 0 < x < 6. For example, A includes at least one of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺ or Ra²⁺, and M⁶ and M⁷ each independently includes at least one cation of Ti, V, Cr, Mn, Fe, Co, Ni, Cu, Zn, Sn or W.

The battery is accompanied by deintercalation and consumption of Li or Na during the charge and discharge process, and the molar content of Li or Na is different when the battery is discharged to different states. In the enumeration of positive electrode materials in the present application, the molar content of Li or Na is at the initial state of the material, that is, the state before adding the material, and the molar content of Li or Na will change after the positive electrode material is applied in the battery system and subjected to charge and discharge cycles.

In the enumeration of positive electrode materials in the present application, the molar content of oxygen is only a theoretical state value. The release of oxygen from a lattice will cause the molar content of oxygen to change. The actual molar content of oxygen will fluctuate.

In some embodiments of the present application, the positive-electrode active material layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer or a fluorine-containing acrylate resin.

In some embodiments of the present application, the positive-electrode active material layer further optionally includes a conductive agent. As an example, the conductive agent may include at least one of superconducting carbon, acetylene black, carbon black, Ketjen black, carbon dot, carbon nanotubes, graphene, or carbon nanofibers.

In some embodiments, the positive electrode plate can be prepared by: dispersing the aforementioned components for preparing the positive electrode plate, e.g., the positive-electrode active material, the conductive agent, the binder and any other components in a solvent (e.g., N-methyl pyrrolidone) to form a positive electrode slurry; and coating the positive electrode slurry on a positive electrode current collector, followed by oven drying, cold pressing and the like procedures, to obtain the positive electrode plate.

A third aspect of the present application proposes a battery including the positive electrode plate of the second aspect of the present application. Therefore, the battery of the present application has higher capacity and cycling performance.

In some embodiments of the present application, the battery further includes a negative electrode plate. The negative electrode plate includes a negative-electrode current collector and a negative-electrode active material layer arranged on at least one surface of the negative-electrode current collector, and the negative-electrode active material layer includes a negative-electrode active material.

As an example, the negative-electrode current collector has two opposite surfaces in its own thickness direction, and the negative-electrode active material layer is arranged on either or both of the opposite surfaces of the negative-electrode current collector.

In some embodiments of the present application, the negative-electrode current collector can be a metal foil or a composite current collector. For example, as the metal foil, a copper foil can be used. The composite current collector may include a polymer base layer and a metal layer formed on at least one surface of the polymer base layer. The composite current collector can be formed by forming a metal material (copper, copper alloy, nickel, nickel alloy, titanium, titanium alloy, silver and silver alloy, etc.) on the polymer base layer (e.g., polypropylene (PP), polyethylene terephthalate (PET), polybutylene terephthalate (PBT), polystyrene (PS), polyethylene (PE), etc.).

In some embodiments of the present application, a negative-electrode active material for the battery well known in the art can be used as the negative-electrode active material. As an example, the negative-electrode active material may include at least one of the following materials: artificial graphite, natural graphite, soft carbon, hard carbon, silicon-based materials, tin-based materials, lithium titanate, and the like. The silicon-based material may include at least one of elemental silicon, a silicon oxide compound, a silicon-carbon composite, a silicon-nitrogen composite, or a silicon alloy. The tin-based material may include at least one of elemental tin, a tin oxide compound, or a tin alloy. However, the present application is not limited to these materials, and other conventional materials useful as negative-electrode active materials for batteries can also be used. These negative-electrode active materials may be used alone or in combination of two or more thereof.

In some embodiments of the present application, the negative-electrode active material layer further optionally includes a binder. The binder may include at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments of the present application, the negative-electrode active material layer further optionally includes a conductive agent. The conductive agent may include at least one of superconducting carbon, acetylene black, carbon black, Ketjen black, carbon dot, carbon nanotubes, graphene, or carbon nanofibers.

In some embodiments of the present application, the negative-electrode active material layer may further optionally include other adjuvants, for example, a thickener (e.g., sodium carboxymethylcellulose (CMC-Na)) and the like.

In some embodiments of the present application, the negative electrode plate can be prepared by: dispersing the aforementioned components for preparing the negative electrode plate, e.g., the negative-electrode active material, the conductive agent, the binder and any other components in a solvent (e.g. deionized water) to form a negative electrode slurry; and coating the negative electrode slurry on a negative-electrode current collector, followed by oven drying, cold pressing and the like procedures, to obtain the negative electrode plate.

Generally, the battery includes a positive electrode plate, a negative electrode plate, an electrolyte and a separator. During the charging and discharging process of the battery, active ions are intercalated and deintercalated back and forth between the positive electrode plate and the negative electrode plate. The electrolyte plays a role of conducting ions between the positive electrode plate and negative electrode plate. The separator is arranged between the positive electrode plate and the negative electrode plate, which mainly plays a role in preventing the short circuit between the positive and negative electrodes, and meanwhile allowing the ions to pass through.

The present application has no specific limitation on the type of the electrolyte, which can be selected according to requirements. For example, the electrolyte may be in a liquid state, a gel state or an all solid state.

In some embodiments of the present application, an electrolyte solution is adopted as the electrolyte. The electrolyte solution includes an electrolyte salt and a solvent.

In some embodiments of the present application, when the battery is a lithium-ion battery, the electrolyte salt may include at least one of lithium hexafluorophosphate, lithium tetrafluoroborate, lithium perchlorate, lithium hexafluoroarsenate, lithium bis(fluorosulfonyl)imide, bistrifluoromethanesulfonimide lithium, lithium trifluoromethanesulfonate, lithium difluorophosphate, lithium difluorooxalate borate, lithium dioxalate borate, lithium difluoro dioxalate borate, or lithium tetrafluorooxalate phosphate.

In some embodiments of the present application, when the battery is a sodium-ion battery, the electrolyte salt may include at least one of sodium hexafluorophosphate, sodium difluorooxalate borate, sodium tetrafluoroborate, sodium bis(oxalate)borate, sodium perchlorate, sodium hexafluoroarsenate, sodium bis(fluorosulfonyl)imide, sodium trifluoromethanesulfonate, or sodium bis(trifluoromethanesulfonyl)imide.

In some embodiments of the present application, the solvent may include at least one of ethylene carbonate, propylene carbonate, ethyl methyl carbonate, diethyl carbonate, dimethyl carbonate, dipropyl carbonate, methylpropyl carbonate, ethylpropyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethylene glycol dimethyl ether, methyl ethyl sulfone, or diethyl sulfone.

In some embodiments of the present application, the electrolyte solution further optionally includes an additive. For example, the additive may include a negative-electrode film-forming additive, or a positive-electrode film-forming additive, or may include an additive that capable of improving some performances of the battery, e.g., an additive for improving the overcharge performance of the battery, an additive for improving the high-temperature performance or low-temperature performance of the battery, and the like.

The present application has no particular limitation on the types of the separator, and any well-known separator of a porous structure with good chemical stability and mechanical stability can be selected for use.

In some embodiments, the material of the separator may include at least one of a glass fiber, non-woven fabric, polyethylene, polypropylene, or polyvinylidene difluoride. The separator may be a single-layer thin film or a multilayer composite thin film, and is not particularly limited. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery may include an outer package. The outer package can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and as the plastic, polypropylene, polybutylene terephthalate, polybutylene succinate and the like can be listed.

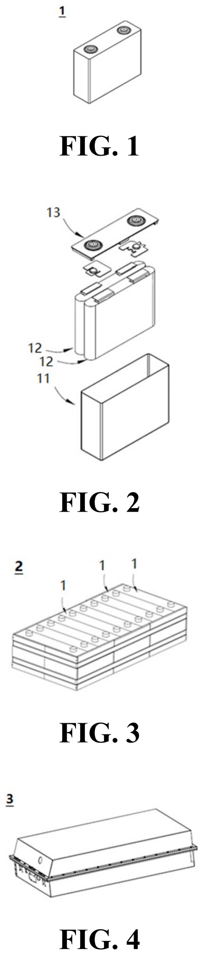

The present application has no specific limitation on the shape of the battery, which can be cylindrical, square or any other shape. For example, FIG. 1 shows a battery cell 1 in a square structure as an example.

In some embodiments, referring to Fig. 2, the outer package may include a housing 11 and a cover plate 13. The case 11 may include a bottom plate and a side plate connected to the bottom plate, and the bottom plate and the side plate enclose to form an accommodating cavity. The case 11 has an opening that communicates with the accommodating cavity, and the cover plate 13 may cover the opening to close the accommodating cavity. The positive electrode plate, the negative electrode plate, and the separator may form the electrode assembly 12 by a winding process or a stacking process. The electrode assembly 12 is encapsulated into the accommodating cavity. The electrode assembly 12 is soaked in the electrolyte solution. The number of the electrode assemblies 12 included in the battery cell 1 can be one or more, which can be selected by those skilled in the art according to specific practical requirements.

In some embodiments, the batteries can be assembled into a battery module, and the number of the batteries included in the battery module can be one or more, and the specific number can be selected by those skilled in the art according to the application and capacity of the battery module.

FIG. 3 shows a battery module 2 as an example. Referring to FIG. 3, in the battery module 2, multiple battery cells 1 may be sequentially arranged along a length direction of the battery module 2. Of course, they can also be arranged in any other way. The multiple battery cells 1 can be further fixed by fasteners.

Optionally, the battery module 2 may further include a shell having an accommodating space, and the plurality of battery cells 1 are accommodated in the accommodating space.

In some embodiments, the aforementioned battery module may further be assembled into a battery pack, the number of battery modules contained in the battery pack may be one or more, and the specific number can be selected by those skilled in the art according to the use and capacity of the battery pack.

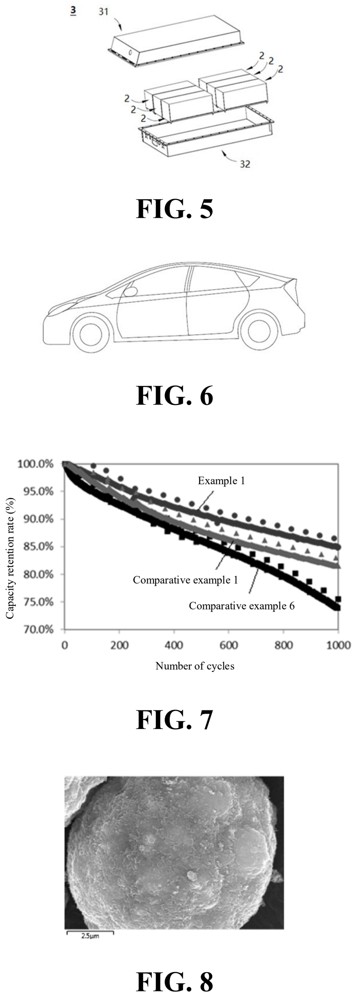

FIGs. 4 and 5 show a battery pack 3 as an example. Referring to Figs. 6 and 7, the battery pack 3 may include a battery box and multiple battery modules 2 disposed in the battery box. The battery box includes an upper box body 31 and a lower box body 32, the upper box body 31 can cover the lower box body 32 to form a closed space for accommodating the battery modules 2. The multiple battery modules 2 may be arranged in the battery box in any manner.

Additionally, the present application further provides an electrical apparatus including at least one of the secondary battery, the battery module, or the battery pack provided by the present application. The secondary battery, the battery module, or the battery pack can be used as a power source for the electrical apparatus, and can also be used as an energy storage unit for the electrical apparatus. The electrical apparatus can include, but is not limited to, a mobile apparatus (e.g., a mobile phone or a laptop), an electric vehicle (e.g., an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the secondary battery, the battery module, or the battery pack may be selected according to its use requirements.

FIG. 6 is an example of an electrical apparatus. The electrical apparatus is an all-electric vehicle, a hybrid electric vehicle, a plug-in hybrid electric vehicle, or the like. To satisfy the need of the electrical apparatus for a high power and high energy density of secondary batteries, a battery pack or a battery module can be used.

As another example, the device may be a mobile phone, a tablet, a laptop, etc. Lighting and thinning of the device is generally required, and thus the battery can be employed as the power supply.

Examples of the present application will be described hereinafter. The Examples described below are illustrative and only used to explain the present application, and cannot be construed as limiting the present application. In Examples in which no specific technologies or conditions are specified, technologies or conditions described in the literature in the art or product specifications are followed. The reagents or instruments used without manufacturer indicated are all commercially available conventional products.

### Example 1

### 1. Preparation of positive electrode plate

### a. Preparation of capacity compensation additive

1 g of nickel oxide (with a particle size of 500 nm-800 nm) was weighed as a catalyst and put into a quartz boat. Then the quartz boat was put into a chemical vapor deposition reaction furnace, nitrogen was introduced into the chemical vapor deposition reaction furnace at a controlled flow rate of 500 sccm, the temperature of the chemical vapor deposition reaction furnace was increased to 800°C, acetylene was introduced into the chemical vapor deposition reaction furnace as a carbon source, reacted for 1 h, and cooled to obtain catalyst-containing carbon nanotubes. After component analysis by ICP (inductively coupled plasma mass spectrometry), it was determined that the mass content of nickel oxide in the catalyst-containing carbon nanotubes was 15 wt%;

Lithium oxalate and the catalyst-containing carbon nanotubes were weighed in a mass ratio of 9:1, mixed in water to a concentration of 20 g/L, stirred for 2 h, and the feed rate of the spray-drying was controlled to be 200 ml/h, the air inlet temperature was controlled to be 120°C, and the air outlet temperature was controlled to be 90°C, so as to obtain a capacity compensation additive.

### b. Preparation of positive electrode plate

The positive-electrode active materials lithium iron phosphate, acetylene black, polyvinylidene fluoride and the aforementioned capacity compensation additive were evenly mixed in a proper amount of N-methyl pyrrolidone (NMP) as a solvent according to the mass ratio of 90.25:3:2:4.75 to obtain a positive-electrode slurry. The positive-electrode slurry was coated onto surfaces at both sides of the aluminum foil of the positive-electrode current collector, and was oven-dried and cold pressed to form negative-electrode active material layers onto surfaces at both sides of the positive-electrode current collector, which were then subjected to procedures of striping and cutting to obtain a positive electrode plate.

### 2. Preparation of negative electrode plate

The negative-electrode active material artificial graphite, the conductive agent carbon black (Super P), the binder styrene butadiene rubber (SBR) and sodium carboxymethyl cellulose (CMC-Na) were evenly mixed in a proper amount of deionized water as a solvent according to the mass ratio of 96:1:1.5:1.5 to obtain a negative-electrode slurry. The negative-electrode slurry was coated onto surfaces at both sides of the copper foil of the negative-electrode current collector, and was oven-dried and cold pressed to form negative-electrode active material layers onto surfaces at both sides of the negative-electrode current collector, which were then subjected to procedures of striping and cutting to obtain a negative electrode plate.

### 3. Preparation of electrolyte solution

In a glove box under an argon atmosphere (H₂O < 0.1 ppm, O₂ < 0.1 ppm), ethylene carbonate and ethyl methyl carbonate were mixed at a mass ratio of 30:70 to obtain a solvent, and a fully dried electrolyte salt LiPF₆ was dissolved in the aforementioned solvent, and mixed evenly to obtain an electrolyte solution with a concentration of 1 mol/L.

### 4. Separator

A polypropylene film was used as the separator.

### 5. Preparation of secondary battery

The positive electrode plate, the separator and the negative electrode plate were stacked in sequence, so that the separator was positioned between the positive electrode plate and the negative electrode plate to play an isolation role, and then wound to obtain an electrode assembly; the electrode assembly was placed in an outer package, and the dried lithium-ion battery was poured with the electrolyte solution prepared above, and subjected to vacuum packaging, standing, chemical formation, shaping and the like procedures to obtain a lithium-ion battery.

Preparation methods of lithium-ion batteries in Examples 2-11 and 14-22 and Comparative Examples 1-2 and 4 were the same as that in Example 1, except that the process of preparing the positive electrode plate was different, specially as shown in Table 1.

The preparation method of the lithium-ion battery in Example 12 was the same as that in Example 1, except that the method for preparing the catalyst-containing carbon material was different, specifically including: adding 0.75 g of NiO and 4.25 g of graphene into 200 ml of deionized water and stirring for 1 h to mix them evenly, then transferring the mixture to a reaction kettle and placing the reaction kettle into a homogeneous reactor, keeping it at 180°C for 15 h, and then centrifuging and oven-drying to obtain a sample of nickel oxide loaded on graphene.

The preparation method of the lithium-ion battery in Example 13 was the same as that in Example 1, except that the method for preparing the catalyst-containing carbon material was different, specifically including: adding 0.75 g of NiO and 4.25 g of carbon nanofibers into 200 ml of deionized water and stirring for 1 h to mix them evenly, then transferring the mixture to a reaction kettle and placing the reaction kettle into a homogeneous reactor, keeping it at 180°C for 15 h, and then centrifuging and oven-drying to obtain a sample of nickel oxide loaded on carbon nanofibers.

The preparation method of the lithium-ion battery of Example 23 was the same as that of Example 1, except that the preparation method of the capacity compensation additive in the process of preparing the positive electrode plate was different, specifically including: weighing 1 g of nickel oxide as a catalyst and putting it into a quartz boat, then putting the quartz boat into a chemical vapor deposition reaction furnace, introducing nitrogen at a controlled flow rate of 500 sccm, heating to 800°C, introducing acetylene as a carbon source, reacting for 1 h, and cooling to obtain catalyst-containing carbon nanotubes. After component analysis by ICP, it was determined that the content of nickel oxide in the catalyst-containing carbon nanotubes was 15 wt%. Lithium oxalate and the catalyst-containing carbon nanotubes were weighed according to a mass ratio of 9:1, mixed in ethanol to a concentration of 10 g/L, and stirred for 2 h to obtain a spinning solution. The push speed of a spinneret was adjusted to 0.5 mL/h, the voltage between the spinneret and a receiver was 18 kV, the distance between the spinneret and the receiver was 15 cm, and spinning was conducted to obtain the capacity compensation additive.

### Comparative Example 3

The preparation method of a lithium-ion battery was the same as that in Example 1, except that the process of preparing the capacity compensation additive in the preparation of the positive electrode plate was different, specially as shown in Table 1.

The method for preparing the capacity compensation additive includes:
1 g of nickel oxide was weighed as a catalyst and put into a quartz boat. Then the quartz boat was put into a chemical vapor deposition reaction furnace, nitrogen was introduced into the chemical vapor deposition reaction furnace at a controlled flow rate of 500 sccm, the temperature of the chemical vapor deposition reaction furnace was increased to 800°C, acetylene was introduced into the chemical vapor deposition reaction furnace as a carbon source, reacted for 1 h, and cooled to obtain catalyst-containing carbon nanotubes. After component analysis by ICP (inductively coupled plasma mass spectrometry), it was determined that the content of nickel oxide in the catalyst-containing carbon nanotubes was 15 wt%;
Lithium oxalate and the catalyst-containing carbon nanotubes were weighed in a mass ratio of 9:1, mixed in water to a concentration of 100 g/L, and then ground by a sand mill for 2 h at a controlled rotation speed of 1,000 revolutions per minute. After drying, a capacity compensation additive was obtained.

### Comparative Example 5

The preparation method of a lithium-ion battery was the same as that in Example 1, except that the process of preparing the capacity compensation additive in the preparation of the positive electrode plate was different, specially as shown in Table 1.

The method for preparing the capacity compensation additive includes:
1 g of nickel oxide was weighed as a catalyst and put into a quartz boat. Then the quartz boat was put into a chemical vapor deposition reaction furnace, nitrogen was introduced into the chemical vapor deposition reaction furnace at a controlled flow rate of 500 sccm, the temperature of the chemical vapor deposition reaction furnace was increased to 800°C, acetylene was introduced into the chemical vapor deposition reaction furnace as a carbon source, reacted for 1 h, and cooled to obtain catalyst-containing carbon nanotubes. After component analysis by ICP (inductively coupled plasma mass spectrometry), it was determined that the content of nickel oxide in the catalyst-containing carbon nanotubes was 15 wt%;
Lithium oxalate and the catalyst-containing carbon nanotubes were weighed in a mass ratio of 9:1, and mixed in water to a concentration of 5 g/L, and then the solution was added dropwise into ethanol, the capacity compensation additive was recrystallized from ethanol, and filtered by suction and dried to obtain the capacity compensation additive.

### Comparative Example 6

The preparation method of a lithium-ion battery was the same as that in Example 1, except that no capacity compensation additive was added in the preparation of the positive electrode plate, specially as shown in Table 1.

**Table 1**

| | Capacity compensation additive | | | | | | | | Positive electrode plate | |
|---|---|---|---|---|---|---|---|---|---|---|
| | Catalyst-containing carbon material | | | | | Capacity compensation agent | Preparation method | Dv50 (µm) | Mass ratio of the positive-electrode active material, acetylene black, polyvinylidene fluoride and the capacity compensation additive | Mass proportion of positive-electrode lithium supplementing additive (wt%) |
| | Catalyst composition | Catalyst particle size (nm) | Carbon material composition | Mass proportion of the catalyst in the catalyst-containing carbon material (wt%) | Mass proportion of the catalyst-containing carbon material in the capacity compensation additive (wt%) | Composition of capacity compensation agent | | | | |
| Example 1 | NiO | 500-800 | Carbon nanotubes | 15 | 10 | Li₂C₂O₄ | Spray-drying | 3 | 90.25:3:2:4.75 | 4.75 |
| Example 2 | NiO | 500-800 | Carbon nanotubes | 15 | 7 | Li₂C₂O₄ | Spray-drying | 3 | 90.25:3:2:4.75 | 4.75 |
| Example 3 | NiO | 500-800 | Carbon nanotubes | 15 | 5 | Li₂C₂O₄ | Spray-drying | 3 | 90.25:3:2:4.75 | 4.75 |
| Example 4 | NiO | 500-800 | Carbon nanotubes | 10 | 10 | Li₂C₂O₄ | Spray-drying | 3 | 90.25:3:2:4.75 | 4.75 |
| Example 5 | NiO | 300-400 | Carbon nanotubes | 10 | 10 | Li₂C₂O₄ | Spray-drying | 3 | 90.25:3:2:4.75 | 4.75 |
| Example 6 | NiO | 900-1000 | Carbon nanotubes | 10 | 10 | Li₂C₂O₄ | Spray-drying | 3 | 90.25:3:2:4.75 | 4.75 |
| Example 7 | NiO | 500-800 | Carbon nanotubes | 5 | 10 | Li₂C₂O₄ | Spray-drying | 3 | 90.25:3:2:4.75 | 4.75 |
| Example 8 | Co₂O₃ | 500-800 | Carbon nanotubes | 15 | 10 | Li₂C₂O₄ | Spray-drying | 3 | 90.25:3:2:4.75 | 4.75 |
| Example 9 | Fe₂O₃ | 500-800 | Carbon nanotubes | 15 | 10 | Li₂C₂O₄ | Spray-drying | 3 | 90.25:3:2:4.75 | 4.75 |
| Example 10 | CoN | 500-800 | Carbon nanotubes | 15 | 10 | Li₂C₂O₄ | Spray-drying | 3 | 90.25:3:2:4.75 | 4.75 |
| Example 11 | Ni₃N₂ | 500-800 | Carbon nanotubes | 15 | 10 | Li₂C₂O₄ | Spray-drying | 3 | 90.25:3:2:4.75 | 4.75 |
| Example 12 | NiO | 500-800 | Graphene | 15 | 10 | Li₂C₂O₄ | Spray-drying | 3 | 90.25:3:2:4.75 | 4.75 |
| Example 13 | NiO | 500-800 | Carbon nanofibers | 15 | 10 | Li₂C₂O₄ | Spray-drying | 3 | 90.25:3:2:4.75 | 4.75 |
| Example 14 | NiO | 500-800 | Carbon nanotubes | 15 | 10 | Li₂C₂O₄ | Spray-drying | 6 | 90.25:3:2:4.75 | 4.75 |
| Example 15 | NiO | 500-800 | Carbon nanotubes | 15 | 10 | Li₂C₂O₄ | Spray-drying | 10 | 90.25:3:2:4.75 | 4.75 |
| Example 16 | NiO | 500-800 | Carbon nanotubes | 10 | 1 | Li₂C₂O₄ | Spray-drying | 3 | 90.25:3:2:4.75 | 4.75 |
| Example 17 | NiO | 500-800 | Carbon nanotubes | 10 | 5 | Li₂C₂O₄ | Spray-drying | 3 | 90.25:3:2:4.75 | 4.75 |
| Example 18 | NiO | 500-800 | Carbon nanotubes | 10 | 20 | Li₂C₂O₄ | Spray-drying | 3 | 90.25:3:2:4.75 | 4.75 |
| Example 19 | NiO | 500-800 | Carbon nanotubes | 20 | 10 | Li₂C₂O₄ | Spray-drying | 3 | 90.25:3:2:4.75 | 4.75 |
| Example 20 | NiO | 500-800 | Carbon nanotubes | 10 | 10 | Li₂CO₃ | Spray-drying | 3 | 90.25:3:2:4.75 | 4.75 |
| Example 21 | NiO | 500-800 | Carbon nanotubes | 10 | 10 | Li₂C₄O₆ | Spray-drying | 3 | 90.25:3:2:4.75 | 4.75 |
| Example 22 | NiO | 500-800 | Carbon nanotubes | 10 | 10 | Li₂C₃O₅ | Spray-drying | 3 | 90.25:3:2:4.75 | 4.75 |
| Example 23 | NiO | 500-800 | Carbon nanotubes | 15 | 10 | Li₂C₂O₄ | Electrostatic spinning | 3 | 90.25:3:2:4.75 | 4.75 |
| Comparative Example 1 | MoC | 500-800 | / | 15 | / | Li₂C₂O₄ | Spray-drying | 5 | 90.25:3:2:4.75 | 4.75 |
| Comparative Example 2 | / | 500-800 | Carbon nanotubes | / | 10 | Li₂C₂O₄ | Spray-drying | 3 | 90.25:3:2:4.75 | 4.75 |
| Comparative Example 3 | NiO | 500-800 | Carbon nanotubes | 15 | 10 | Li₂C₂O₄ | Sand grinding | 3 | 90.25:3:2:4.75 | 4.75 |
| Comparative Example 4 | NiO | 500-800 | / | 15 | / | Li₂C₂O₄ | Spray-drying | 3 | 90.25:3:2:4.75 | 4.75 |
| Comparative Example 5 | NiO | 500-800 | Carbon nanotubes | 15 | 10 | Li₂C₂O₄ | Recrystallization | 3 | 90.25:3:2:4.75 | 4.75 |
| Comparative Example 6 | / | / | / | / | / | / | / | / | 95:3:2:0 | 0 |

The powder resistivity and decomposition voltages of the capacity compensation additives as well as the first charging capacities and cycling performance of the batteries obtained in Examples 1-23 and Comparative Examples 1-6 were characterized. The characterization results were shown in Table 2.

### (1) Decomposition voltage test of capacity compensation additives

### Preparation of button battery:

### a. preparation of positive electrode plate:

Lithium iron phosphate, a capacity compensation additive, acetylene black and a binder polyvinylidene fluoride were dissolved in N-methyl pyrrolidone (NMP) as a solvent according to the mass ratio of 90.25:3:2:4.75, and then mixed evenly under sufficient stirring to prepare a positive electrode slurry. The positive electrode slurry was coated on the surface at one side of an aluminum foil (with the coating face density of 0.8 mm²), then oven-dried and cold pressed to form a positive-electrode active material layer (with a thickness of 0.05 mm) on the surface at one side of the aluminum foil (with a thickness of 15 µm), and the positive-electrode active material layer was finally subjected to die cutting to obtain a positive electrode plate.

### b. preparation of negative electrode plate:

A metal lithium plate with a thickness of 0.5 mm was used as the negative electrode plate.

### c. Preparation of separator:

Polyethylene was used as the separator (with a thickness of 20 µm);

### d. Preparation of electrolyte solution

Ethylene carbonate (EC), ethyl methyl carbonate (EMC) and dimethyl carbonate (DMC) were mixed at a mass ratio of 1:1:1 to obtain a solvent, and a fully dried electrolyte salt LiPF₆ was dissolved in the aforementioned solvent, and mixed evenly to obtain an electrolyte solution with a concentration of 1 mol/L.

Assembly: a single positive electrode plate, a single separator, and a single negative electrode plate were stacked sequentially (the side of the positive electrode plate where the positive-electrode active material layer was formed contacted the separator), so that the separator was placed between the positive and negative electrodes to play an isolation role, an electrolyte solution was added, and pressure packaging (500 MPa) was conducted to obtain a button battery A with the model of CR2032 (with the capacity ≤ 2 mAh).

The aforementioned button full battery A was used as an experimental example to perform charge-discharge cycles at a rate of 0.1 C at 25°C, the capacity (Q)-voltage (V) curve of the first cycle was recorded, and a dQ/dV-V curve was obtained by differentiating the capacity (Q)-voltage (V) curve. At the same time, the button battery of the control group (the positive electrode plate was not added with the capacity compensation additive, that was, lithium iron phosphate, acetylene black, and the binder polyvinylidene fluoride were mixed at a mass ratio of 95:3:2 in the preparation of the positive electrode plate, and the rest was the same as that of the aforementioned button battery) was utilized to obtain the dQ/dV-V curve under the same conditions. By comparing the two curves, an additional peak could be seen on the dQ/dV-V curve of the button battery of the experimental example. The position of the peak was the position of the characteristic peak of the capacity compensation additive, and the ordinate corresponding to the position of the peak was the decomposition potential of the capacity compensation additive.

### (2) Test of powder resistivity

Four probes were utilized to measure a current and a voltage on a powder sample, and resistivity was calculated based on the current and the voltage.

### (3) First charging capacity test of the battery:

A button battery B was prepared, which was different from the button battery A in that no capacity compensation additive was added during the preparation of the positive electrode plate. Lithium iron phosphate, acetylene black and the binder polyvinylidene fluoride were dissolved in N-methyl pyrrolidone (NMP) as a solvent according to the mass ratio of 95:3:2, and mixed evenly under sufficient stirring to prepare a positive electrode slurry.

At 25°C, the aforementioned button battery A was charged to 4.5 V at a constant current and a current density of 0.1 C, and the first charging gram capacity Q_{A} of the battery was recorded. Then, the button battery B was charged to 4.5 V at a constant current and a current density of 0.1 C, and the first charging gram capacity Q_{B} of the battery was recorded. The first charging capacity = (Q_{A} - W₁Q_{B}) / W₂, where in the positive electrode plate in the button battery A, based on the total mass of lithium iron phosphate and the capacity compensation additive, the mass proportion of the capacity compensation additive was W₂, and the mass proportion of lithium iron phosphate was W₁.

### (4) cycling performance test of lithium-ion battery:

The ambient temperature was controlled at 60°C, the battery was allowed to stand for 2 h, discharged at 1 C to 2.5 V, allowed to stand for 5 min, charged at 1 C to 3.65 V, allowed to stand for 5 min, and discharged at 1 C to 2.5 V, and the discharge capacity was recorded as C₀. According to the process flow of charging at 1 C to 3.65 V, allowing to stand for 5 min, discharging at 1 C to 2.5 V, and allowing to stand for 5 min, 1,000 cycles were performed. The discharge capacity of the 1,000th cycle was C₁, and the cycling capacity retention rate of the battery cell = C₁/C₀ * 100%.

FIG. 7 was a comparison chart of cycling curves of the batteries of Example 1 and Comparative Examples 1 and 6. It could be seen from FIG. 7 that the capacity retention rate of the lithium-ion battery of Example 1 was significantly higher than those of Comparative Examples 1 and 6 after 1,000 cycles, indicating that adding the capacity compensation additive including the catalyst-containing carbon material to the positive electrode plate of Example 1 could improve the cycling performance of the battery.

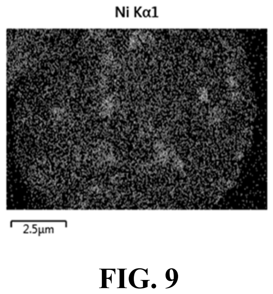

FIG. 8 was a SEM image of the capacity compensation additive obtained in Example 1, and FIG. 9 was a distribution diagram of the Ni element in the EDS spectrum of the capacity compensation additive obtained in Example 1 (referring to the test method of GB/T 17359-2012). It could be seen from the figures that the Ni element was evenly distributed on the surface of the capacity compensation additive, which indicated that the carbon nanotubes containing nickel oxide were evenly distributed on the surface of the capacity compensation agent and the nickel oxide was evenly distributed on the carbon nanotubes.

**Table 2**

| | Capacity Compensation Additive | | Battery | |
|---|---|---|---|---|
| | Powder resistivity (Ω·cm) | Decomposition voltage (V) | First charge capacity (mAh/g) | Capacity retention rate (%) |
| Example 1 | 0.2835 | 4.05 | 500 | 85 |
| Example 2 | 0.8542 | 4.1 | 470 | 83.4 |
| Example 3 | 1.3597 | 4.12 | 435 | 83.2 |
| Example 4 | 0.2725 | 4.22 | 428 | 82.9 |
| Example 5 | 0.3249 | 4.25 | 395 | 81.9 |
| Example 6 | 0.3347 | 4.27 | 387 | 81.7 |
| Example 7 | 0.2649 | 4.25 | 400 | 82.1 |
| Example 8 | 0.4268 | 4.15 | 456 | 84.1 |
| Example 9 | 0.3654 | 4.36 | 412 | 83.5 |
| Example 10 | 0.5238 | 4.21 | 427 | 82.4 |
| Example 11 | 0.3569 | 4.4 | 382 | 82.2 |
| Example 12 | 0.3754 | 4.13 | 452 | 84.2 |
| Example 13 | 0.5842 | 4.28 | 413 | 84.8 |
| Example 14 | 0.6574 | 4.38 | 328 | 82 |
| Example 15 | 1.1262 | 4.39 | 310 | 81.9 |
| Example 16 | 78264 | 4.43 | 273 | 81.9 |
| Example 17 | 1.5364 | 4.35 | 376 | 82.5 |
| Example 18 | 0.1548 | 4.39 | 315 | 82.2 |
| Example 19 | 1.6548 | 4.15 | 300 | 82.1 |
| Example 20 | 0.3642 | 4.25 | 329 | 82.1 |
| Example 21 | 0.5493 | 4.32 | 284 | 81.7 |
| Example 22 | 0.4735 | 4.38 | 275 | 81.9 |
| Example 23 | 0.2941 | 4.08 | 485 | 84.9 |
| Comparative Example 1 | 26548 | 4.43 | 270 | 81.5 |
| Comparative Example 2 | 0.3584 | 4.47 | 94 | 72.4 |
| Comparative Example 3 | 0.7625 | 4.45 | 185 | 75.3 |
| Comparative Example 4 | 153478.3 | 4.48 | 35 | 72.6 |
| Comparative Example 5 | 0.3658 | 4.43 | 237 | 76.5 |
| Comparative Example 6 | / | / | / | 73.7 |

Conclusion: it could be seen from the data in Table 2 that the decomposition voltages of the capacity compensation agents of Examples 1-23 were significantly lower than those of Comparative Examples 1-6, and the first charging capacities and capacity retention rates of the batteries of Examples 1-23 were significantly higher than those of Comparative Examples 1-6, which thus indicated that the capacity compensation additive of the present application had a lower decomposition voltage, thereby improving the capacity and cycling performance of the battery.

It should be noted that the present application is not limited to the aforementioned embodiments. The above embodiments are only examples, and embodiments that have the same composition and exert the same effect as the technical ideas within the scope of the technical solution of the present application are included in the technical scope of the present application. In addition, without departing from the scope of the main intention of the present application, various modifications that can be conceived by those skilled in the art are applied to the embodiments, and other modes constructed by combining some of the constituent elements of the embodiments are also included within the scope of the present application.

## Claims

1. A capacity compensation additive, comprising a capacity compensation agent and a catalyst-containing carbon material, wherein the catalyst-containing carbon material is coated on at least a portion of a surface of the capacity compensation agent.

2. The capacity compensation additive according to claim 1, wherein the catalyst-containing carbon material comprises a carbon support and a catalyst, and the catalyst is supported on at least a portion of the carbon support, and the catalyst comprises MₓQ_{y}, wherein 1 ≤ x ≤ 6 and 1 ≤ y ≤ 3, M comprises at least one of Ni, Co, Mn, Fe, Cu, Ti, Nb, Mg or Cr, and Q comprises at least one of O, N, S or P.

3. The capacity compensation additive according to claim 2, wherein M comprises at least one of Ni, Co or Fe, and the Q comprises O and/or N.

4. The capacity compensation additive according to claim 2 or 3, wherein a mass proportion of the catalyst is 5%-20% based on a total mass of the catalyst-containing carbon material.

5. The capacity compensation additive according to any one of claims 2-4, wherein the mass proportion of the catalyst is 5%-15% based on the total mass of the catalyst-containing carbon material.

6. The capacity compensation additive according to any one of claims 2-5, wherein a particle size of the catalyst is 300 nm-1 µm.

7. The capacity compensation additive according to any one of claims 2-6, wherein a particle size of the catalyst is 500 nm-800 nm.

8. The capacity compensation additive according to any one of claims 1-7, wherein a mass proportion of the catalyst-containing carbon material is 1%-20% based on a total mass of the capacity compensation additive.

9. The capacity compensation additive according to any one of claims 1-8, wherein the mass proportion of the catalyst-containing carbon material is 5%-10% based on the total mass of the capacity compensation additive.

10. The capacity compensation additive according to any one of claims 1-9, wherein the capacity compensation agent comprises AₐC_{b}O_{c}, wherein the A comprises Na and/or Li, 2 ≤ a ≤ 4, 1 ≤ b ≤ 6, and 3 ≤ c ≤ 6.

11. The capacity compensation additive according to any one of claims 1-10, wherein the capacity compensation agent comprises a lithium supplementing agent, and the lithium supplementing agent comprises at least one of Li₂CO₃, Li₂C₂O₄, Li₂C₄O₄, Li₂C₄O₆ or Li₂C₃O₅.

12. The capacity compensation additive according to claim 11, wherein the lithium supplementing agent comprises at least one of Li₂CO₃, Li₂C₂O₄ or Li₂C₄O₄.

13. The capacity compensation additive according to any one of claims 1-12, wherein the capacity compensation agent comprises a sodium supplementing agent, and the sodium supplementing agent comprises at least one of Na₂CO₃, Na₂C₂O₄, Na₂C₄O₄, Na₂C₆O₆ or Na₄C₆O₆.

14. The capacity compensation additive according to claim 13, wherein the sodium supplementing agent comprises at least one of Na₂C₂O₄ or Na₂C₄O₄.

15. The capacity compensation additive according to any one of claims 1-14, wherein a volume average particle diameter Dv50 of the capacity compensation additive is 1 µm-20 µm.

16. The capacity compensation additive according to any one of claims 1-15, wherein the volume average particle diameter Dv50 of the capacity compensation additive is 1 µm-10 µm.

17. The capacity compensation additive according to any one of claims 1-16, wherein powder resistivity of the capacity compensation additive is less than or equal to 5 Ω·cm under 20 MPa.

18. The capacity compensation additive according to any one of claims 1-17, wherein the powder resistivity of the capacity compensation additive is less than or equal to 1 Ω·cm under 20 MPa.

19. The capacity compensation additive according to any one of claims 1-18, wherein a decomposition voltage of the capacity compensation additive is lower than or equal to 4.5 V.

20. The capacity compensation additive according to any one of claims 1-19, wherein the decomposition voltage of the capacity compensation additive is lower than or equal to 4.3 V.

21. A method for preparing a capacity compensation additive, comprising coating a catalyst-containing carbon material on at least a portion of a surface of a capacity compensation agent, so as to obtain the capacity compensation additive.

22. The method according to claim 21, wherein the coating a catalyst-containing carbon material on at least a portion of a surface of a capacity compensation agent is conducted by the following manner:
spray-drying a slurry comprising the catalyst-containing carbon material and the capacity compensation agent, so that the catalyst-containing carbon material is coated on at least a part of the surface of the capacity compensation agent.

23. The method according to claim 22, wherein the spray-drying comprises at least one of the following conditions:
a concentration of the slurry comprising the capacity compensation agent and the catalyst-containing carbon material is 20 g/L-50 g/L;
an air inlet temperature is 120°C-150°C; and
an air outlet temperature is 80°C-100°C.

24. The method according to claim 22 or 23, wherein the coating a catalyst-containing carbon material on at least a portion of a surface of a capacity compensation agent is conducted by the following manner:
carrying out electrostatic spinning on a slurry comprising the catalyst-containing carbon material and the capacity compensation agent, so that the catalyst-containing carbon material is coated on at least a part of the surface of the capacity compensation agent.

25. The method according to claim 24, wherein the electrostatic spinning comprises at least one of the following conditions:
a concentration of the slurry comprising the capacity compensation agent and the catalyst-containing carbon material is 5g/L-20g/L;
a push speed of a spinneret is 0.3 mL/h-1 mL/h;
a voltage between the spinneret and a receiver is 15 kV-18 kV; and
a distance between the spinneret and the receiver is 12 cm-20 cm.

26. A positive electrode plate, comprising the capacity compensation additive according to any one of claims 1-20 or a capacity compensation additive obtained by the method according to any one of claims 21-25.

27. The positive electrode plate according to claim 26, wherein the positive electrode plate comprises a positive-electrode active material layer, and the positive-electrode active material layer comprises the capacity compensation additive.

28. The positive electrode plate according to claim 27, wherein a mass proportion of the capacity compensation additive is 1%-20% based on a total mass of the positive active material layer.

29. The positive electrode plate according to claim 27 or 28, wherein the mass proportion of the capacity compensation additive is 1%-5% based on a total mass of the positive active material layer.

30. A battery comprising the positive electrode plate according to any one of claims 26-29.

31. An electrical apparatus comprising the battery according to claim 30.
